# EUROPÄISCHE PATENTANMELDUNG

(11) **EP 1 160 585 A2**
(43) Veröffentlichungstag der Anmeldung: **05.12.2001**
(21) Anmeldenummer: 01112168.8
(22) Anmeldetag: 17.05.2001
(51) Int. Cl.: G01S 17/10, G01S 7/487, G01S 7/497, G01S 17/42

(54) **Verfahren zur Abstandsmessung und Abstandsmesseinrichtung**

(30) Priorität: 31.05.2000 DE 10027239
(71) Anmelder: SICK AG, 79183 Waldkirch (DE)
(72) Erfinder: Pierenkemper, Hans-Werner, 79312 Emmendingen (DE)
(74) Vertreter: Manitz, Finsterwald & Partner Gbr

(57) **Zusammenfassung**

Es wird ein Verfahren zur Erfassung des Abstands zwischen einer einen Sender und einen Empfänger umfassenden Meßeinrichtung und einem Objekt beschrieben, bei dem von dem Sender ein moduliertes Lichtsignal in Richtung des Objekts ausgesandt wird, das an dem Objekt reflektierte Lichtsignal von dem Empfänger empfangen und in ein Reflexionssignal umgewandelt wird und aus der Lichtlaufzeit des empfangenen Lichtsignals der Abstand zwischen der Meßeinrichtung und dem Objekt ermittelt wird. Zusätzlich zu dem am Objekt reflektierten Lichtsignal wird zumindest ein Teil des ausgesandten Lichtsignals ohne Reflexion an dem Objekt von einem Empfänger als Referenzlichtsignal empfangen und in ein Referenzsignal umgewandelt. Anschließend wird die Phasenverschiebung zwischen dem Reflexionssignal und dem Referenzsignal zur Bestimmung der Lichtlaufzeit ermittelt. Weiterhin wird eine gemäß dem erfindungsgemäßen Verfahren arbeitende Abstandsmeßeinrichtung beschrieben.

## Beschreibung

Die vorliegende Erfindung betrifft ein Verfahren zur Erfassung des Abstands zwischen einer einen Sender und einen Empfänger umfassenden Meßeinrichtung und einem Objekt, bei dem von dem Sender entlang eines Sendekanals ein moduliertes Lichtsignal in Richtung des Objekts ausgesandt wird, das an dem Objekt reflektierte Lichtsignal von dem Empfänger über einen Empfangskanal empfangen und in ein Reflexionssignal umgewandelt wird und aus der Lichtlaufzeit des empfangenen Lichtsignals der Abstand zwischen der Meßeinrichtung und dem Objekt ermittelt wird. Weiterhin ist die Erfindung auf eine Abstandsmeßeinrichtung mit einem zumindest ein Lichtsignal entlang eines Sendekanals aussendenden Sender und mit einem Empfänger zum Empfangen des an einem Objekt reflektierten Lichtsignals über einen Empfangskanal und zum Erzeugen eines entsprechenden Reflexionssignals gerichtet, wobei die Meßeinrichtung eine Meßeinheit zum Messen der Lichtlaufzeit des empfangenen Lichtsignals und eine Auswerteeinheit zur Bestimmung des Abstandes zwischen der Meßeinrichtung und dem Objekt aus der gemessenen Lichtlaufzeit umfaßt.

Ein Verfahren und eine Abstandsmeßeinrichtung dieser Art sind beispielsweise aus der DE 34 29 062.1 bekannt. Dabei wird zur Ermittlung des Abstands zwischen der Meßeinrichtung und dem Objekt von der Meßeinrichtung ein Lichtpuls in Richtung des Objekts ausgesandt, wobei gleichzeitig mit dem Ausenden des Lichtpulses ein Zähler gestartet wird. Trifft der von dem Objekt reflektierte Lichtpuls auf dem Empfänger auf, so wird der Zähler angehalten, wenn das durch den auf den Empfänger auftreffende Lichtsignal erzeugte Ausgangssignal des Empfängers einen gewissen Schwellenwert überschreitet. Aus der Anzahl der Zählimpulse, die unmittelbar zu der Lichtlaufzeit des empfangenen Lichtsignals korrespondiert, und der Ausbreitungsgeschwindigkeit des Lichtsignales kann dann der Abstand zwischen der Meßeinrichtung und dem Objekt berechnet werden.

Dieses Verfahren sowie die mit diesem Verfahren arbeitende Meßeinrichtung haben sich in der Praxis bewährt. Insbesondere wenn eine sehr hohe Meßgenauigkeit erforderlich ist, kann jedoch bei dem bekannten Verfahren das Problem auftreten, daß der Zündzeitpunkt für die üblicherweise verwendete Sendediode beispielsweise aufgrund sich ändernden Ansprechverhaltens der Sendediode durch Alterung nicht exakt mit dem tatsächlichen Zeitpunkt des Aussendens des Sendeimpulses zusammenfällt. Da der verwendete Zähler gleichzeitig mit dem Zünden der Laserdiode gestartet wird, kann auf diese Weise eine gewisse Meßungenauigkeit bei der Messung der Lichtlaufzeit bestehen. Weiterhin hängt die ermittelte Lichtlaufzeit auch von der Wahl des Schwellenwertes für das Ausgangssignal des Empfängers ab, da die ausgesandten und empfangenen Lichtpulse üblicherweise schräge Flanken besitzen, und daher ein höherer Schwellenwert zu einem späteren Anhalten des Zählers führt.

Es ist eine Aufgabe der vorliegenden Erfindung ein Verfahren sowie eine Meßeinrichtung der eingangs genannten Art so weiterzubilden, daß eine erhöhte Meßgenauigkeit erzielt wird.

Ausgehend von dem Verfahren der eingangs genannten Art wird die das Verfahren betreffende Aufgabe gemäß der Erfindung dadurch gelöst, daß zusätzlich zu dem am Objekt reflektierten Lichtsignal zumindest ein Teil des ausgesandten Lichtsignals ohne Reflexion an dem Objekt von einem Empfänger als Referenzlichtsignal empfangen und in ein Referenzsignal umgewandelt wird und daß die Phasenverschiebung zwischen dem Reflexionssignal und dem Referenzsignal zur Bestimmung der Lichtlaufzeit ermittelt wird, wobei zwischen Sende- und Empfangskanal eine optische Trennung existiert.

Der die Meßeinrichtung betreffende Teil der Aufgabe wird erfindungsgemäß ausgehend von einer Abstandsmeßeinrichtung der eingangs genannten Art dadurch gelöst, daß in einem vorgegebenen Abstand, insbesondere in unmittelbarer Nähe zu dem Sender ein Empfänger vorgesehen ist, mit dem zumindest ein Teil des ausgesandten Lichtsignals unmittelbar, d.h. ohne Reflexion an dem Objekt als Referenzlichtsignal empfangbar und in ein Referenzsignal umwandelbar ist, daß mit der Auswerteeinheit die Phasenverschiebung zwischen dem Reflexionssignal und dem Referenzsignal zur Bestimmung der Lichtlaufzeit ermittelbar ist, und daß im Bereich von Sender und Empfänger eine optische Trennung zwischen Sende- und Empfangskanal vorhanden ist.

Erfindungsgemäß wird somit als Startzeitpunkt für die Messung nicht der Zündzeitpunkt des Sendeelements verwendet, sondern es wird das ausgesandte Lichtsignal zweimal empfangen, einmal nach Reflexion an dem Objekt und einmal ohne Reflexion an dem Objekt, so daß zur Bestimmung der Lichtlaufzeit zwei Empfangssignale vorliegen, deren Phasenverschiebung ermittelt wird. Falls zwischen dem Zünden des Sendeelements und dem tatsächlichen Aussenden des dadurch erzeugten Lichtpulses eine Verzögerung bestehen sollte, so wird diese durch die Erfindung automatisch kompensiert, da zur Bestimmung der Lichtlaufzeit das in diesem Fall verzögerte Sendelichtsignal als Referenz für die Bestimmung der Lichtlaufzeit verwendet wird. Der das Referenzsignal erzeugende Empfänger ist dabei bevorzugt in unmittelbarer Nähe zu dem Sender angeordnet, da auf diese Weise das von dem Empfänger erzeugte Referenzsignal unmittelbar als zeitliche Bezugsgröße verwendet werden kann. Ist zwischen dem Sender und dem Empfänger ein größerer, vorgegebener Abstand vorhanden, so kann ein entsprechender Offset-Wert bei der Bestimmung der Phasenverschiebung berücksichtigt werden.

Durch die erfindungsgemäß vorgesehene optische Trennung zwischen Sendekanal und Empfangskanal im Bereich von Sender und Empfänger wird ausgeschlossen, daß Streulicht aus dem Sendekanal in den Empfangskanal gelangen und zu einer Blendung der Empfangseinheit führen kann. Ein Übersprechen zwischen Sendekanal und Empfangskanal kann erfindungsgemäß somit vollständig vermieden werden.

Im Zusammenhang mit dieser Anmeldung wird der Begriff "Lichtsignal" im Sinne von allgemein optischen Signale verwendet. Bevorzugt können Lichtsignale im sichtbaren Lichtbereich und/oder im Infrarotbereich und/oder im UV-Bereich verwendet werden.

Nach einer vorteilhaften Ausführungsform der Erfindung werden pulsförmige Lichtsignale verwendet. Je nach Anwendung können dabei Einzelimpulse oder Impulspakete oder auch völlig beliebige Signalformen verwendet werden.

Nach einer weiteren vorteilhaften Ausführungsform der Erfindung wird zum Empfangen des reflektierten Lichtsignals und des Referenzlichtsignals derselbe Empfänger verwendet. Dies hat den Vorteil, daß das Referenzlichtsignal und das an dem Objekt reflektierte Lichtsignal von ein und demselben Empfänger empfangen und in ein entsprechendes Ausgangssignal umgesetzt werden. Unterschiede, die bei der Verwendung unterschiedlicher Empfänger, beispielsweise aufgrund von Alterung, Temperaturfehler oder Fertigungstoleranzen vorhanden sein können, sind auf diese Weise ausgeschlossen. Bevorzugt wird dabei ein Teil des von dem Sender ausgesandten Lichtsignals gezielt dem Empfänger als Referenzlichtsignal zugeführt. Sind der Sender und der Empfänger optisch voneinander entkoppelt, so kann dies beispielsweise durch einen Lichtleiter geschehen, der einen Teil des von dem Sender ausgesandten Lichtsignals zu dem Empfänger führt. Dadurch kann die Menge des dem Empfänger zugeführten Lichtsignals exakt eingestellt werden, was insbesondere deshalb wichtig ist, da die Empfindlichkeit des Sensors üblicherweise sehr hoch ist, um Lichtsignale, die von weit entfernt angeordneten Objekten bzw. dunklen Objektoberflächen reflektiert werden, empfangen zu können. Bevorzugt wird daher der dem Empfänger als Referenzlichtsignal zugeführte Teil des ausgesandten Lichtsignals abgedämpft. Wenn für das reflektierte Lichtsignal und das Referenzlichtsignal derselbe Empfänger verwendet werden, ist es weiterhin von Vorteil, wenn das Referenzlichtsignal über eine solche Lichtführung zum Empfänger geleitet wird, die die ansonsten im Bereich von Sender und Empfänger vorhandene optische Trennung zwischen Sende- und Empfangskanal unterbricht.

Nach einer weiteren bevorzugten Ausführungsform der Erfindung ist es jedoch auch möglich, daß zum Empfangen des reflektierten Lichtlichtsignals und des Referenzlichtsignals unterschiedliche Empfänger verwendet werden. Diese Ausführungsform kann zum einem bauliche Vorteile, insbesondere bezüglich der Flexibilität der Vorrichtung besitzen und zum anderen können Sender und Empfänger auf diese Weise vollständig optisch entkoppelt ausgebildet werden.

Nach einer weiteren bevorzugten Ausführungsform der Erfindung werden die Amplituden des Referenzsignals und des Reflexionssignals normiert. Auf diese Weise ist eine besonderes einfacher Vergleich von Referenzsignal und Reflexionssignal möglich, so daß die Phasenverschiebung zwischen diesen Signalen besonders einfach und mit hoher Meßgenauigkeit ermittelt werden kann.

Bevorzugt werden das Referenzsignal und Reflexionssignal einer Analog-Digital-Wandlung unterzogen. Auf diese Weise kann die Signalverarbeitung, insbesondere die Bestimmung des Phasenunterschiedes mit einer digitalen Signalverarbeitung durchgeführt werden. Beispielsweise kann für die digitalisierten Werte des Referenzsignals und Reflexionssignals eine Interpolation, insbesondere eine Polynominterpolation durchgeführt werden, wobei die Phasenverschiebung durch einen Vergleich der ermittelten Interpolationsfunktionen ermittelt wird.

Bevorzugt können dabei die Maxima der Interpolationsfunktionen bestimmt werden und zur Ermittlung der Phasenverschiebung der zeitliche Abstand von zwei ermittelten Maxima berechnet werden. Durch die Verwendung einer Polynominterpolation und die damit verbundene Maximabestimmung können die Signale unabhängig von den durch die Abtastrate vorgegebenen Stützwerten verglichen werden, wodurch eine erhöhte Meßgenauigkeit erzielt wird.

Anstelle oder zusätzlich zur Maximabestimmung können beispielsweise auch die Wendepunkte der Interpolationsfunktionen bestimmt werden und zur Ermittlung der Phasenverschiebung der zeitliche Abstand von zwei ermittelten Wendepunkten berechnet werden.

Werden die Empfangssignale auf den gleichen Wert normiert, so kann die Phasenverschiebung auch durch die Ermittlung der Zeitdifferenz zwischen gleichen Amplitudenwerten, insbesondere mit gleichen Steigungswerten erfolgen. Zur Erhöhung der Meßgenauigkeit ist es auch möglich, mehrere Vergleichswerte, beispielsweise Maxima, Wendepunkte oder gleiche Amplitudenwerte für eine Bestimmung der Zeitdifferenz zwischen den Empfangssignalen zu verwenden und eine Integration über die unterschiedlichen erhaltenen Zeitdifferenzen durchzuführen. Auf diese Weise werden durch kurzzeitige Störungen verursachte einzelne fehlerbehaftete Werte durch eine Mittelwertbildung kompensiert.

Nach einer weiteren vorteilhaften Ausführungsform der Erfindung werden jeweils der zeitliche Verlauf des Referenzsignals und Reflexionssignals gespeichert und die gespeicherten Signalverläufe für die Ermittlung der Lichtlaufzeit verwendet. Aufgrund der Verfügbarkeit des Signalverlaufs, der eine "Historie" jedes Abtastvorgangs darstellt, können Störeinflüsse, wie beispielsweise in der Luft vorhandene Partikel, eine verschmutzte Frontscheibe der Meßeinrichtung oder eine fehlerhaft erkannte Remission an einem Umlenkspiegel, die innerhalb der optischen Wegstrecke des ausgesandten Lichtsignals auftreten, für die Abstandsermittlung eliminiert werden. Je nach Anwendungsfall kann dabei die Lichtlaufzeit aus den gespeicherten Signalverläufen unter Berücksichtigung von vorgegebenen anwendungsspezifischen Gegebenheit ermittelt werden. Durch die Auswertung der gespeicherten Signalverläufe können beispielsweise zeitlich aufeinanderfolgende Reflexionen erkannt werden. Ist beispielsweise im Strahlengang ein Umlenkspiegel angeordnet, dessen Abstand zu der Meßeinrichtung bekannt ist, so kann ein Empfangssignal, das durch eine Reflexion an dem Umlenkspiegel erzeugt wird, aufgrund der für diese bekannte Entfernung bekannte Lichtlaufzeit als Störsignal identifiziert werden. Erst das im Anschluß an dieses Störsignal empfangene nächste Empfangssignal kann dann beispielsweise als am Objekt reflektiertes Lichtsignal erkannt werden.

Eine weitere Möglichkeit, Störsignale auszufiltern, kann darin bestehen, daß jeweils der innerhalb eines Auswerteintervalls zuletzt empfangene Impuls als gültiges Empfangssignal identifiziert wird. Sind innerhalb der optischen Wegstrecke des ausgesandten Lichtsignals Störeinflüsse vorhanden, die eine vorzeitige Reflexion zumindest eines Teils des Lichts bewirken, wie beispielsweise Partikel in Form von Schneeflocken oder Verschmutzungen an der Frontscheibe der Meßeinrichtung, so wird jedoch immer das am Objekt reflektierte Lichtsignal als letztes reflektiertes Lichtsignal auf den Empfänger treffen. Daher kann das zuletzt vor Aussenden des nächsten Lichtimpulses empfangene Lichtsignal als das den Abstand zu dem Objekt kennzeichnende Lichtsignal identifiziert werden.

Auch durch eine Mehrfachauswertung der empfangenen reflektierten Lichtsignale von mehreren hintereinander ausgesandten Lichtpulsen kann insbesondere bei sich bewegenden Störelementen, wie beispielsweise Schneeflocken oder Staubpartikeln in der Luft, eine Eliminierung fehlerhaft empfangener reflektierter Lichtsignale erreicht werden.

Nach einer weiteren vorteilhaften Ausführungsform der Erfindung werden das Referenzsignal und/oder das Reflexionssignal mit einer ersten Abtastrate abgetastet, die zu den Abtastzeitpunkten jeweils erfaßten analogen Signalwerte mit der ersten Abtastrate in einen oder mehrere Analogspeicher eingelesen und die in dem/den Analogspeichern abgespeicherten Signalwerte mit einer zweiten, geringeren Abtastrate aus dem/den Analogspeichern ausgelesen und einer Analog-Digital-Wandlung unterzogen.

Grundsätzlich ist es auch möglich, daß die erfaßten analogen Signalwerte unmittelbar mit einer schnellen Analog-Digital-Wandlung in entsprechende digitale Werte umgesetzt und einer entsprechenden Weiterverarbeitung beispielsweise durch Einsatz eines Signalprozessors zugeführt werden. Eine solche schnelle Analog-Digital-Wandlung hat jedoch den Nachteil, daß ein relativ hoher Leistungsbedarf vorhanden ist und die Baugrößen entsprechender Elemente relativ groß sind. Damit sind auch die Kosten für eine solche schnelle Analog-Digital-Wandlung relativ hoch.

Mit dem Einsatz eines oder mehrere Analog-Speicher werden diese Nachteile der schnellen Direktwandlung vermieden. Die von den Empfängern erzeugten analogen Signalwerte werden mit einer hohen Abtastrate in den/die Analogspeicher geschrieben, woraufhin die mit der hohen Abtastrate abgespeicherten analogen Stützstellenwerte mit einer deutlich niedrigeren, an die Pulsfolgefrequenz des Sendesignals angepaßten Wandlungsrate digitalisiert werden können. Diese Wandlungsrate ist bevorzugt so gewählt, daß alle für einen Sendepuls abgespeicherten Stützstellenwerte bis zum Aussenden des nächste Sendepulses umgewandelt sind. Die umgewandelten, digitalisierten Signalwerte stehen anschließend beispielsweise als 8-Bit-Datenworte für die Weiterverarbeitung zur Verfügung.

Die Abtastrate, mit der die analogen Signalwerte in den Analogspeicher geschrieben werden, kann beispielsweise zwischen 500 MHz und 10 GHz, insbesondere zwischen 2,5 GHz und 5 GHz liegen. Die Abtastrate bzw. die Wandlungsrate, mit der die analog gespeicherten Signalwerte digitalisiert werden, kann beispielsweise zwischen 1 MHz und 50 MHz, insbesondere bei ungefähr 25 MHz liegen.
Die Pulslänge der vom Sender ausgesandten Lichtsignale kann beispielsweise ungefähr 3 ns betragen, wobei die Periodendauer der Frequenz, mit der die pulsförmigen Lichtsignale ausgesendet werden, ungefähr 35 µs betragen kann. In diesem Fall stehen für die Auswertung eines ausgesandten und empfangenen Lichtsignals ungefähr 30 µs zur Verfügung.

Da die Empfänger auch Signale, die an Objekten mit niedrigem Remissionsfaktor remittiert wurden, sicher erfassen müssen, besitzen die Empfänger üblicherweise eine relativ hohe Empfindlichkeit. Dies kann dazu führen, daß bei einem geringen Tastabstand oder einem Objekt mit hohem Remissionsfaktor eine Verzerrung des Ausgangssignals des Empfängers durch eine Signalbegrenzung erfolgt. Insbesondere bei der Ermittlung der Phasendifferenz über eine Maximabestimmung von Interpollationsfunktionen kann dies zu Problemen führen. Bevorzugt kann daher in der Empfangselektronik ein Logarithmierverstärker verwendet werden, durch den eine unerwünschte Signalbegrenzung vermieden wird. Eine entsprechende Delogarithmierung kann bei der Signalauswertung in einfacher Weise durchgeführt werden.

Insbesondere durch die Verwendung einer anpaßbaren Software für die Auswertung des Referenzsignals sowie des Reflexionssignals kann das erfindungsgemäße Verfahren sowie die erfindungsgemäße Meßeinrichtung sehr flexibel je nach Anwendungsfall eingesetzt werden.

Die Meßgenauigkeit der Phasendifferenz und damit der Lichtlaufzeit bzw. des Objektabstandes kann bevorzugt für störbehaftete Signale mittels Korrelationsrechnungen, beispielsweise Kreuzkorrelation, Faltung oder Fouriertransformation, der Lage des Reflexionssignals zum Referenzsignal noch weiter verbessert werden.

Das Lichtsignal kann nach einer bevorzugten Ausführungsform der Erfindung auch so in Richtung eines Objekts ausgesandt werden, daß eine Schwenkbewegung des Lichtsignals über die Oberfläche des Objektes erfolgt. Dies kann beispielsweise durch ein Spiegelrad oder einen Schwingspiegel erreicht werden. Jede Ablenkung des ausgesandten Lichtsignals an einer Fläche des rotierende Polygonspiegelrades bzw. an dem Schwingspiegel während eines Schwingungsvorganges erzeugt einen sogenannten Scan, während dem das Objekt mit einer Abtastlinie überstrichen wird. Werden während eines Scans beispielsweise mehrere Lichtimpulse als Lichtsignale ausgesandt, so können, wie bereits beschrieben, alle diese Lichtsignale ohne Reflexion an dem Objekt von einem Empfänger als Referenzlichtsignale empfangen und in Referenzsignale umgewandelt werden.

Es ist jedoch auch möglich, daß beispielsweise während eines Scans nur bei einer vorgegebenen Winkelposition des Polygonspiegelrades bzw. des Schwingwinkels das zu diesem Zeitpunkt auf die Spiegelfläche treffende und von dieser reflektierte Lichtsignal von dem Empfänger aufgenommen und in ein Referenzsignal umgewandelt wird. Ist die Winkelposition bekannt, so kann das erzeugte Referenzsignal in einen definierten zeitlichen Bezug zu den während des gesamten Scans durch Reflexion an dem Objekt erzeugten Reflexionssignalen gesetzt werden, indem die entsprechende Offset-Werte für die unterschiedlichen, während eines Scans erhaltenden Reflexionssignale verwendet werden.

Die erfindungsgemäß vorgesehene Trennung zwischen Sendekanal und Empfangskanal läßt sich dann besonders vorteilhaft verwirklichen, wenn Sender und Empfänger jeweils in einem kammerartigen Gehäuseabschnitt des die erfindungsgemäße Vorrichtung beinhaltenden Gehäuses angeordnet sind. Diese Gehäuseabschnitte können jeweils durch ein insbesondere aus Glas oder lichtdurchlässigen Kunststoff hergestelltes Lichtdurchtrittsfenster für das Sende- bzw. Empfangslicht verschlossen sein.

Weitere vorteilhafte Ausführungsformen der Erfindung sind in den Unteransprüchen angegeben.

Die Erfindung wird nachfolgend anhand eine von Ausführungsbeispielen unter Bezugnahme auf die Zeichnungen näher beschrieben; in diesen zeigen:
- Fig. 1: eine erste Ausführungsform einer erfindungsgemäß ausgebildeten Abstandsmeßeinrichtung,
- Fig. 2: eine zweite Auführungsform einer erfindungsgemäß ausgebildeten Abstandsmeßeinrichtung,
- Fig. 3: den Verlauf des Referenzsignals und des Reflexionssignals für einen ausgesandten Lichtimpuls und
- Fig. 4: eine weitere Ausführungsform einer erfindungsgemäß ausgebildeten Abstandsmeßeinrichtung.

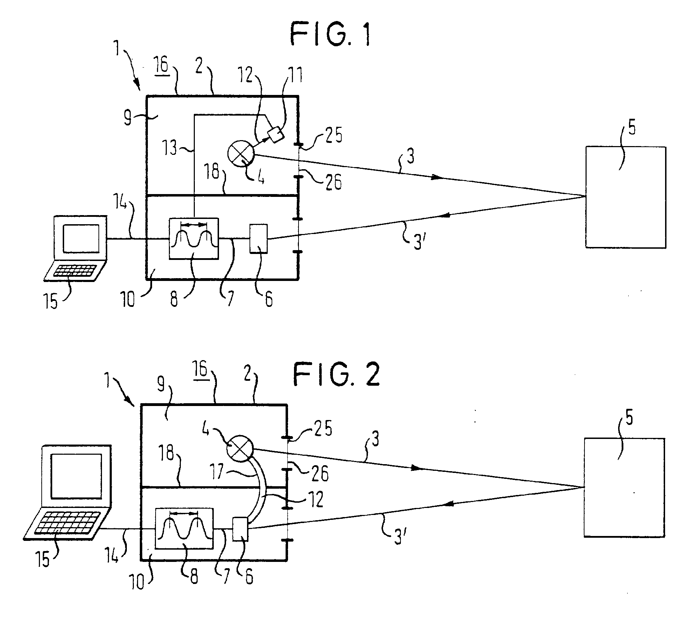

Fig. 1 zeigt eine Meßeinrichtung 1 mit einer Meßeinheit 16, in deren Gehäuse 2 ein Lichtsignale 3 durch eine Durchtrittsöffnung 25 hindurch aussendender Sender 4 angeordnet ist.

Die Lichtsignale 3 werden an einem Objekt 5 reflektiert und als reflektierte Lichtsignale 3' von einem ebenfalls in dem Gehäuse 2 angeordneten, lichtempfindlichen Empfänger 6 empfangen. Der Empfänger 6 wandelt das empfangene reflektierte Lichtsignal 3' in ein zu diesem korrespondierendes Reflexionssignal um, das über eine Leitung 7 einem Speicherbereich 8 zugeführt wird.

Der Sender 4 und der Empfänger 6 sind in unterschiedlichen Abschnitten 9, 10 des Gehäuses 2 angeordnet, die durch eine Trennwand 18 optisch voneinander so getrennt sind, daß von dem Sender 4 ausgesandtes Licht nicht unmittelbar auf den Empfänger 6 trifft.

In dem Gehäuseabschnitt 9 ist ein weiterer Empfänger 11 in unmittelbarer Nähe zu dem Sender 4 angeordnet, auf den ein Teil 12 der von dem Sender 4 ausgesandten Lichtsignale auftrifft. Der weitere Empfänger 11 wandelt diese Lichtsignale 12 in Referenzsignale um, die über eine Leitung 13 ebenfalls dem Speicherbereich 8 zugeführt werden.

Der Speicherbereich 8 ist über eine weitere Leitung 14 mit einer Auswerteeinheit 15 verbunden, die in Fig. 1 beispielhaft als Computer ausgebildet ist. Grundsätzlich kann die Auswerteeinheit 15 auch innerhalb des Gehäuses 2 der Meßeinheit 16 angeordnet sein.

Der Speicherbereich 8 kann einen oder mehrere Speicherabschnitte umfassen, wobei die von den Empfängern 6 und 11 in den Speicherbereich 8 geschriebenen Signaldaten der Reflexionssignale bzw. Referenzsignale in unterschiedliche Speicherabschnitte oder in den gleichen Speicherabschnitt geschrieben werden können.

Üblicherweise wird vor dem Abspeichern der Signalwerte jeweils eine Analog-Digital-Wandlung durchgeführt, so daß die digitalisierten Werte in dem Speicherbereich 8 abgespeichert werden.

Es ist jedoch auch möglich, daß der Speicherbereich 8 zumindest bereichsweise als Analogspeicher ausgebildet ist, und die von den Empfängern 6 und 11 gelieferten analogen Signalwerte mit einer hohe Abtastrate als Analogwerte in dem Analogspeicherbereich abgespeichert werden. Die mit der hohe Abtastrate in den Analogspeicherbereich geschriebenen Stützstellenwerte können anschließend mit einer niedrigeren, an die Pulsfolgefrequenz des Sendesignals angepaßten Wandlungsrate digitalisiert und in einem Digitalspeicherabschnitt des Speicherbereichs 8 oder unmittelbar in einem Speicher der Auswerteeinheit 15 abgespeichert werden.

Die in Fig. 2 dargestellte Ausführungsform stimmt in wesentlichen Aspekten mit der Ausführungsform nach Fig. 1 überein, so daß sich entsprechende Elemente mit den gleichen Bezugszeichen wie in Fig. 1 bezeichnet sind.

Abweichend von der Ausführungsform nach Fig. 1 umfaßt die Meßeinheit 16 gemäß Fig. 2 nur einen Empfänger 6, mit dem, wie bei Fig. 1, die reflektierten Lichtsignale 3' empfangen werden. Gleichzeitig werden mit dem Empfänger 6 jedoch auch unmittelbar von dem Sender 4 ausgesandte Lichtsignale 12 empfangen, die beispielsweise über einen Lichtleiter 17 von dem Sender 4 zu dem Empfänger 6 geleitet werden.

Diese Lichtsignale 12 verlaufen somit ohne Reflexion an dem Objekt 5 unmittelbar vom Sender 4 zu dem Empfänger 6, so daß die Lichtlaufzeit dieser Lichtsignale vernachlässigbar ist bzw. aufgrund der vorgegebenen Wegstrecke bekannt ist.

Grundsätzlich ist es auch möglich, daß anstelle des Lichtleiters 17 einfach die Trennwand 18 entfernt oder unterbrochen ist, so daß von dem Sender 4 ausgesandte Lichtsignale unmittelbar von dem Empfänger 6 aufgenommen werden können.

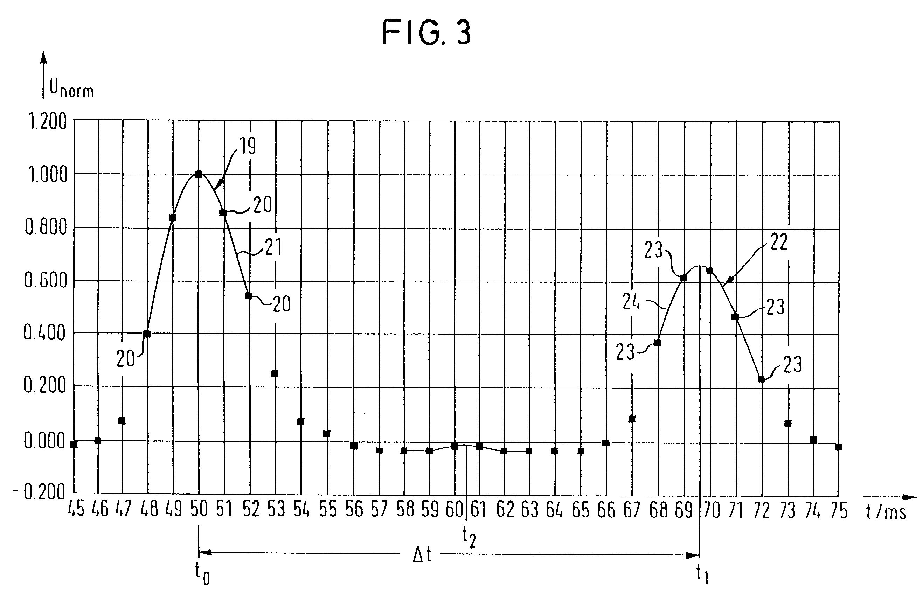

Fig. 3 zeigt schematisch den Verlauf der empfangenen Lichtsignale, wie er in dem Speicherbereich 8 abgespeichert ist. Dabei entspricht der in Fig. 3 dargestellte Verlauf den Empfangssignalen beim Aussenden eines einzelnen Lichtimpulses durch den Sender 4.

Im linken Bereich der Fig. 3 ist das Referenzsignal 19 dargestellt, wie es von dem Empfänger 11 gemäß Fig. 1 bzw. dem Empfänger 6 gemäß Fig. 2 aufgrund des unmittelbar von dem Sender 4 zu dem Empfänger 11 bzw. 6 geleitetem Teil 12 des ausgesandten Lichtsignals geführt wird. Dabei sind in Fig. 3 sowohl die in dem Speicherbereich 8 gemäß der verwendeten Abtastrate abgelegten digitalisierten Meßwerte 20 dargestellt als auch ein durch eine Polynominterpolation ermittelter Verlauf 21, der das Referenzsignal 19 repräsentiert. Die die Amplitudenwerte darstellenden Spannungswerte sind dabei als normierte Werte dargestellt.

Im rechten Bereich der Fig. 3 ist der zeitlich verzögerte, durch das Reflexionssignal 22 repräsentierte Empfangsimpuls dargestellt, wie er von dem Empfänger 6 aufgrund des auf diesen auftreffenden reflektierten Lichtsignals 3' in dem Speicherbereich 8 abgelegt wird. Auch hier sind sowohl die digitalisierten, im Speicherbereich 8 abgelegten Signalwerte 23 sowie ein durch eine Polynominterpolation ermittelter Verlauf 24 dargestellt.

Die zeitlich Verzögerung Δt zwischen dem Reflexionssignal 22 und dem Referenzsignal 19, die der Phasenverschiebung zwischen diesen Signalen entspricht, kann durch die Differenz t₁ - t₀ ermittelt werden, wobei die Zeitpunkte t₁ und t₀ jeweils den Positionen der Maxima des Reflexions-signals 22 sowie des Referenzsignals 19 entsprechen. Diese können durch eine Maximabestimmung, beispielsweise durch Ermittlung der Ableitung der entsprechenden Interpolationsfunktionen ermittelt werden. Da die Zeitpunkte t₁ und t₀ nicht exakt mit den Stützstellenwerten zusammenfallen, kann auf diese Weise der Erhöhung der Meßgenauigkeit erreicht werden.

Aus der ermittelten Zeitdifferenz Δt, die die Lichtlaufzeit des ausgesandten Lichtpulses darstellt, kann dann unter Berücksichtigung der Lichtausbreitungsgeschwindigkeit der Abstand zwischen der Meßeinrichtung 1 und dem Objekt 5 berechnet werden.

Der Verlauf des Empfangssignals wird vorzugsweise nicht nur für die in Fig. 3 dargestellten Bereiche, sondern für alle digitalisierten Werte 20, 23 durch eine Polynominterpolation bestimmt, so daß eine vollständige Historie des Abtastvorgangs ausgewertet werden kann.

Auf diese Weise können Störeinflüsse kompensiert werden, die ohne Kenntnis des vollständigen Verlaufs nicht als solche erkannt werden würden.

Es ist beispielsweise möglich, daß das ausgesandte Lichtsignal 3 vor Erreichen des Objektes 5 zum Teil an in der Luft vorhandenen Partikeln, wie Staub oder Schnee remittiert werden und dieser remittierte Teil von dem Empfänger 6 empfangen wird. Dies kann zu einem Störmaximum zum Zeitpunkt t₂ führen, wie es in Fig. 2 angedeutet ist. Würde lediglich das Überschreiten eines vorgegebenen Schwellenwertes am Ausgang des Empfängers 6 überprüft, so würde dieses Störmaximum eine fehlerhafte Berechnung des Abstandes zwischen der Meßeinrichtung 1 und dem Objekt 5 verursachen.

Wird jedoch der vollständige Verlauf für den gesamten Abtastvorgang vom Aussenden eines Sendesignals bis zum Aussenden des nächsten Sendesignals auswertet, so können aufgrund vorgegebener Entscheidungskriterien anwendungsspezifisch Störsignale erkannt und eliminiert werden. Beispielsweise kann in dem soeben beschriebenen Fall davon ausgegangen werden, daß das Referenzsignal durch das erste Maximum und das Reflexionssignal durch das letzte ermittelte Maximum repräsentiert werden, so daß es sich bei zwischen diesen auftretenden Maxima um durch Störeinflüsse erzeugte Störmaxima handeln muß.

Bei Störeinflüssen durch sich bewegende Objekte, wie beispielsweise Staubpartikel oder Schnee in der Luft, können auch die Verläufe mehrerer aufeinanderfolgender Abtastvorgänge ausgewertet und miteinander verglichen werden. Da aufgrund der Bewegung der Störpartikel die entsprechenden Störmaxima jeweils an unterschiedlichen Stellen auftreten werden, können diese erkannt und eliminiert werden.

Wird ein entsprechendes Störmaximum beispielsweise durch eine Remisson an einem im Strahlengang vorgesehenen Umlenkspiegel verursacht, dessen Abstand zu der Meßeinrichtung bekannt ist, so kann aufgrund des bekannten Abstandes die zugehörige Lichtlaufzeit von der Meßeinrichtung 1 bis zu dem Umlenkspiegel berechnet und mit dem jeweiligen Ort der ermittelten Maxima verglichen werden. Auf diese Weise können durch Remission an dem Umlenkspiegel erzeugte Maxima ebenfalls zuverlässig eliminiert werden.

Auch bei einer Verschmutzung einer die Durchtrittsöffnung 25 begrenzenden Frontscheibe 26 können entsprechende Störmaxima im ermittelten Verlauf des Empfangssignals verursacht werden. Mit den beschriebenen Verfahren können auch diese Störmaxima sicher erkannt und eliminiert werden.

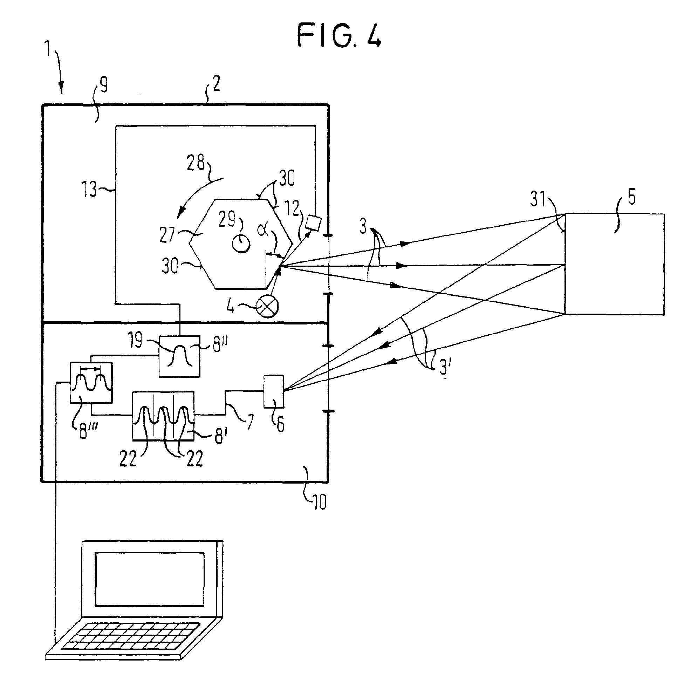

Fig. 4 zeigt eine weitere Ausgestaltung einer erfindungsgemäß ausgebildeten Meßeinrichtung 1, bei der wiederum den Ausführungsformen gemäß den Fig. 1 und 2 entsprechende Elemente mit den gleichen Bezugszeichen wie in den Fig. 1 und 2 bezeichnet sind.

Bei der Ausführungsform gemäß Fig. 4 ist innerhalb des Gehäuseabschnitts 9 ein Polygonspiegelrad 27 vorgesehen, das gemäß einem Pfeil 28 um eine Drehachse 29 rotiert.

Das Polygonspiegelrad 27 umfaßt sechs Spiegelflächen 30, über die das von dem Empfänger 4 ausgesandte Lichtsignal 3 in Richtung des Objekts 5 abgelenkt wird. Durch die Rotation des Polygonspiegelrades 27 werden dabei die ausgesandten Lichtsignale 3 über die Oberfläche des Objekts 5 verschwenkt, so daß pro Spiegelfläche 30 jeweils eine Abtastlinie 31 auf der Oberfläche des Objekts 5 projiziert wird. Jede dieser Abtastlinien repräsentiert dabei einen Abtastvorgang oder "Scan".

Während eines Scans werden üblicherweise eine Vielzahl von pulsförmigen Lichtsignalen 3 von dem Sender 4 ausgesandt, so daß von dem Empfänger 6 eine entsprechende Vielzahl von reflektierten Lichtpulsen 3' empfangen werden und damit in dem Speicherbereich 8' eine Vielzahl von Reflexionssignalen 22 pro Scan abgelegt werden, wie es in Fig. 4 angedeutet ist.

Grundsätzlich kann auch bei Verwendung eines Polygonspiegelrades 27 für jedes der Reflexionssignale 22 ein entsprechende Referenzsignal 19 erzeugt werden, so daß die jeweilige Phasenverschiebung für jedes Paar bestehend aus Referenzsignal 19 und Reflexionssignal 22 gemäß der zu Fig. 3 beschriebenen Vorgehensweise die Phasenverschiebung und damit die Lichtlaufzeit ermittelt werden kann.

Gemäß der in Fig. 4 dargestellten Ausführungsform wird jedoch von dem Empfänger 11 pro Scan nur bei einer vorgegebenen Winkelstellung α ein Referenzsignal 19 erzeugt und in einem Abschnitt 8" des Speicherbereichs 8 abgelegt. Dieses Referenzsignal 19 wird dabei für jedes der Reflexionssignale 22 innerhalb des gleichen Scans als Bezugssignal verwendet, da aufgrund der bekannten Winkelstellung α für die unterschiedlichen Reflexionssignale 22 jeweils ein zeitlicher Offset-Wert bestimmt und bei der Ermittlung der Phasenverschiebung berücksichtigt werden kann.

Die Auswertung der jeweils in Bezug gesetzten Reflexionssignale 22 sowie des Referenzsignals 19 erfolgt dabei in der bereits beschriebenen Weise und ist in Fig. 4 durch die in einem Abschnitt 8''' des Speicherbereichs 8 abgelegten Signalwerte angedeutet.

### Bezugszeichenliste

- 1: Meßeinrichtung
- 2: Gehäuse
- 3: Lichtsignale
- 3': reflektierte Lichtsignale
- 4: Sender
- 5: Objekt
- 6: Empfänger
- 7: Leitung
- 8: Speicherbereich
- 8', 8", 8''': Abschnitte des Speicherbereichs
- 9: Gehäuseabschnitt
- 10: Gehäuseabschnitt
- 11: weiterer Empfänger
- 12: Teil der Lichtsignale
- 13: Leitung
- 14: Leitung
- 15: Auswerteeinheit
- 16: Meßeinheit
- 17: Lichtleiter
- 18: Trennwand
- 19: Referenzsignal
- 20: digitalisierte Werte
- 21: Verlauf
- 22: Reflexionssignal
- 23: digitalisierte Werte
- 24: Verlauf
- 25: Durchtrittsöffnung
- 26: Frontscheibe
- 27: Polygonspiegelrad
- 28: Pfeil
- 29: Drehachse
- 30: Spiegelflächen
- 31: Abtastlinie

## Patentansprüche

1. Verfahren zur Erfassung des Abstands zwischen einer einen Sender und einen Empfänger umfassenden Meßeinrichtung und einem Objekt, bei dem von dem Sender entlang eines Sendekanals ein moduliertes Lichtsignal in Richtung des Objekts ausgesandt wird, das an dem Objekt reflektierte Lichtsignal von dem Empfänger über einen Empfangskanal empfangen und in ein Reflexionssignal umgewandelt wird und aus der Lichtlaufzeit des empfangenen Lichtsignals der Abstand zwischen der Meßeinrichtung und dem Objekt ermittelt wird,
**dadurch gekennzeichnet,**
**daß** zusätzlich zu dem am Objekt reflektierten Lichtsignal zumindest ein Teil des ausgesandten Lichtsignals ohne Reflexion an dem Objekt von einem Empfänger als Referenzlichtsignal empfangen und in ein Referenzsignal umgewandelt wird und daß die Phasenverschiebung zwischen dem Reflexionssignal und dem Referenzsignal zur Bestimmung der Lichtlaufzeit ermittelt wird, wobei zwischen Sende- und Empfangskanal eine optische Trennung existiert.

2. Verfahren nach Anspruch 1,
**dadurch gekennzeichnet,**
**daß** als Lichtsignale sichtbares Licht und/oder Licht im IR-Bereich und/oder Licht im UV-Bereich und/oder daß pulsförmige Lichtsignale verwendet werden.

3. Verfahren nach einem der vorhergehenden Ansprüche,
**dadurch gekennzeichnet,**
**daß** zum Empfangen des reflektierten Lichtsignals und des Referenzlichtsignals derselbe Empfänger verwendet wird, insbesondere daß das Referenzlichtsignal über eine Lichtführung zum Empfänger geleitet wird, die die ansonsten im Bereich von Sender und Empfänger vorhandene optische Trennung zwischen Sende- und Empfangskanal unterbricht.

4. Verfahren nach Anspruch 1 oder 2,
**dadurch gekennzeichnet,**
**daß** zum Empfangen des reflektierten Lichtsignals und des Referenzlichtsignals unterschiedliche Empfänger verwendet werden.

5. Verfahren nach einem der vorhergehenden Ansprüche,
**dadurch gekenn*z*eichnet,**
daß ein Teil des von dem Sender ausgesandten Lichtsignals gezielt dem Empfänger als Referenzlichtsignal zugeführt wird und/oder daß der dem Empfänger als Referenzlichtsignal zugeführte Teil des ausgesandten Lichtsignals abgedämpft wird und/oder daß die Amplituden des Referenzsignals und des Reflexionssignals normiert werden.

6. Verfahren nach einem der vorhergehenden Ansprüche,
**dadurch gekennzeichnet,**
**daß** das Reflexionssignal und das Referenzsignal einer Analog-Digital-Wandlung unterzogen werden.

7. Verfahren nach Anspruch 6,
**dadurch gekenn*z*eichnet,**
daß für die digitalisierten Werte des Reflexionssignals und des Referenzsignals eine Interpolation, insbesondere eine Polynominterpolation durchgeführt wird und daß die Phasenverschiebung durch einen Vergleich der ermittelten Interpolationsfunktionen ermittelt wird.

8. Verfahren nach Anspruch 7,
**dadurch gekennzeichnet,**
**daß** die Maxima der Interpolationsfunktionen bestimmt werden und daß zur Ermittlung der Phasenverschiebung der zeitliche Abstand von zwei ermittelten Maxima berechnet wird.

9. Verfahren nach Anspruch 7 oder 8,
**dadurch gekennzeichnet,**
**daß** die Wendepunkte der Interpolationsfunktionen bestimmt werden und daß zur Ermittlung der Phasenverschiebung der zeitliche Abstand von zwei ermittelten Wendepunkten berechnet wird.

10. Verfahren nach einem der vorhergehenden Ansprüche,
**dadurch gekennzeichnet,**
**daß** jeweils der zeitliche Verlauf des Reflexionssignals und des Referenzsignals gespeichert wird und daß die gespeicherten Signalverläufe für die Ermittlung der Lichtlaufzeit verwendet werden, insbesondere daß die Lichtlaufzeit aus den gespeicherten Signalverläufen unter Berücksichtigung von vorgegebenen anwendungsspezifischen Gegebenheiten ermittelt wird.

11. Verfahren nach einem der vorhergehenden Ansprüche,
**dadurch gekennzeichnet,**
**daß** das Reflexionssignal und/oder das Referenzsignal mit einer ersten Abtastrate abgetastet werden, daß die zu den Abtastzeitpunkten jeweils erfaßten analogen Signalwerte mit der ersten Abtastrate in einen oder mehrere Analogspeicher eingelesen werden und daß die in dem/den Analogspeichern abgespeicherten Signalwerte mit einer zweiten, geringeren Abtastrate aus dem/den Analogspeichern ausgelesen und einer Analog-Digital-Wandlung unterzogen werden.

12. Verfahren nach Anspruch 11,
**dadurch gekennzeichnet,**
**daß** die erste Abtastrate zwischen 500 MHz und 10 GHz, insbesondere zwischen 2,5 GHz und 5 GHz beträgt und daß die zweite Abtastrate zwischen 1 MHz und 50 MHz, insbesondere ungefähr 25 MHz und 5 GHz beträgt.

13. Abstandsmeßeinrichtung mit einem zumindest ein Lichtsignal (3) entlang eines Sendekanals aussendenden Sender (4) und mit einem Empfänger (6) zum Empfangen des an einem Objekt (5) reflektierten Lichtsignals (3') über einen Empfangskanal und zum Erzeugen eines entsprechenden Reflexionssignals (22), wobei die Meßeinrichtung (1) eine Meßeinheit (16) zum Messen der Lichtlaufzeit (Δt) des empfangenen Lichtsignals (3') und eine Auswerteeinheit (15) zur Bestimmung des Abstandes zwischen der Meßeinrichtung (1) und dem Objekt (5) aus der gemessenen Lichtlaufzeit (Δt) umfaßt,
**dadurch gekenn*z*eichnet,**
daß in einem vorgegebenen Abstand, insbesondere in unmittelbarer Nähe zu dem Sender (4) ein Empfänger (6, 11) vorgesehen ist, mit dem zumindest ein Teil (12) des ausgesandten Lichtsignals unmittelbar, d.h. ohne Reflexion an dem Objekt (5) als Referenzlichtsignal empfangbar und in ein Referenzsignal (19) umwandelbar ist,
daß mit der Auswerteeinheit (15) die Phasenverschiebung zwischen dem Reflexionssignal (22) und dem Referenzsignal (19) zur Bestimmung der Lichtlaufzeit (Δt) ermittelbar ist, und
daß im Bereich von Sender (4) und Empfänger (6, 11) eine optische Trennung (18) zwischen Sende- und Empfangskanal vorhanden ist.

14. Abstandsmeßeinrichtung nach Anspruch 13,
**dadurch gekennzeichnet,**
**daß** der Sender (3) und der Empfänger (6, 11) zum Empfangen des Referenzlichtsignals (19) in einem gemeinsamen Gehäuse (2) angeordnet sind.

15. Abstandsmeßeinrichtung nach Anspruch 13 oder 14,
**dadurch gekennzeichnet,**
**daß** ein gemeinsamer Empfänger (6) zum Empfangen des Referenzlichtsignals (19) und des Reflexionslichtsignals (22) vorgesehen ist, insbesondere daß eine Lichtführung (17) für das Referenzlichtsignal vorgesehen ist, die die im Bereich von Sender (4) und Empfänger (6) vorhandene optische Trennung (18) zwischen Sende- und Empfangskanal unterbricht.

16. Abstandsmeßeinrichtung nach Anspruch 13 oder 14,
**dadurch gekennzeichnet,**
**daß** ein erster Empfänger (6) zum Empfangen des Reflexionslichtsignals (22) und ein weiterer Empfänger (11) zum Empfangen des Referenzlichtsignals (19) vorgesehen sind.

17. Abstandsmeßeinrichtung nach einem der Ansprüche 13 bis 16,
**dadurch gekennzeichnet,**
**daß** der Sender (4), der erste Empfänger (6) und der weitere Empfänger (11) in einem gemeinsamen Gehäuse (2) angeordnet sind und/oder daß der Sender (4) und der Empfänger (6) jeweils in einem kammerartigen Gehäuseabschnitt (9, 10) des Gehäuses (2) angeordnet sind, die durch eine Trennwand (18) lichtdicht voneinander getrennt sind, wobei bevorzugt die Gehäuseabschnitte (9, 10) durch ein insbesondere aus Glas oder lichtdurchlässigem Kunststoff hergestelltes Lichtdurchtrittsfenster (26) verschlossen sind.
